# EUROPEAN PATENT APPLICATION

(11) **EP 4 794 098 A1**
(43) Date of publication of application: **19.08.2026**
(21) Application number: 26157767.0
(22) Date of filing: 11.02.2026
(51) Int. Cl.: H01M 50/367, H01M 50/204, H01M 50/209, H01M 50/383, H01M 10/613, H01M 10/6556

(54) **IMPROVED BATTERY MODULE AND IMPROVED BATTERY PACK**

(30) Priority: 13.02.2025 IT 202500002757
(71) Applicant: FPT Industrial S.p.A., 10156 Torino (IT)
(72) Inventor: WOODALL, Chris, 10156 TORINO (IT); MERRITT, Simon David, 10156 TORINO (IT); HOWE, William, 10156 TORINO (IT)
(74) Representative: Studio Torta S.p.A.

(57) **Abstract**

Battery pack (1) comprising a housing (2) defining a space (S) for housing at least a battery module (3), the battery module (3) comprising a support system (4) defining a space (S') for housing a plurality of battery cells (10) and a venting system (4) defining a venting channel (V) fluidly connected to the space (S'), the housing (2) comprising venting means (23) configured to allow selectively communication between said space (S) and the environment, the battery pack (1) comprising a labyrinthic system (30) fluidly connecting the venting channel (V) to venting means (23), the labyrinthic system (30) providing an obliged path for a flow (F) for gas/flames igniting from any among the battery cells (10) towards the venting means (23) of a predetermined length.

## Description

### CROSS-REFERENCE TO RELATED APPLICATIONS

This patent application claims priority from Italian patent application no. 102025000002757 filed on February 13, 2025, the entire disclosure of which is incorporated herein by reference.

### TECHNICAL FIELD

The present invention concerns a battery module and related battery pack for storing electrical batteries.

The present invention finds its preferred, although not exclusive, application in vehicular field. Reference will be made to this application by way of example below.

### BACKGROUND OF THE INVENTION

Vehicles tend more and more to be electrified in order to reduce emissions due to the use of internal combustion engines or to completely replace these ones.

To this end, hybrid, electric, or hydrogen vehicles are increasingly used. These vehicles, as known, use electrical energy for the purpose of driving/operating the vehicle operating systems or store electrical energy produced by generators via battery systems.

These battery systems comprise one or more battery modules housed inside a casing that isolates them from the external environment and allows the necessary wiring to be housed.

It is possible that the internal heating within the batteries reaches such levels as to generate a phenomenon called "thermal runaway" in which the temperature triggers exothermic reactions that further raise the temperature and, thus, as a result can lead to disastrous consequences such as explosions or fires.

In particular, these explosions involve the propagation of free flames and particulates that are particularly hazardous both for vehicle passengers and for the spreading of the fire to other parts of the vehicle or around this latter.

In order to improve the safety of such battery systems, rule EC R100.3 sets forth very strict criteria regarding the propagation of free flames and particulates outside the casing housing the batteries.

Therefore, there is need to improve known battery systems in order to limit the escape of free flames and particulates from the battery housing, avoiding hazards connected to the prior art systems described above.

Moreover, existing battery systems are particularly heavy and bulky. Accordingly, their displacement and disposition within relative housings is not easy.

Therefore, there is also need to improve the manufacturability and reducing number of components of existing battery modules.

An aim of the present invention is to satisfy the above mentioned needs in a cost-effective and optimized manner.

### SUMMARY OF THE INVENTION

The aforementioned aim is reached by a battery module, and a battery pack as claimed in the appended set of claims that are integral part of the present description.

### BRIEF DESCRIPTION OF DRAWINGS

For a better understanding of the present invention, a preferred embodiment is described in the following, by way of a non-limiting example, with reference to the attached drawings wherein:
- Figure 1 is a perspective view of a battery pack provided with a plurality of battery modules according to the present invention;
- Figures 2A-2B are perspective view of battery modules according to the invention;
- Figure 3 is an enlarged perspective view of a portion of a battery module according to the invention;
- Figure 4 is a perspective view of an element of a battery module according to the invention;
- Figure 5 is an enlarged perspective view of a further portion of a battery module according to the invention;
- Figures 6 and 7 are a perspective view of the battery pack according to the invention with lines indicating gas flow passage; and
- Figures 8A and 8B are schematic sectional views of different embodiments of the portion shown in Figure 3.

### DETAILED DESCRIPTION OF THE INVENTION

The attached figures disclose a battery pack 1 that can be used in a vehicle (not shown) and extending along a longitudinal axis A, a traversal axis B and a vertical axis C.

The battery pack 1 comprises a housing 2 defining a space S and extending along the aforementioned axis A, B, C and a plurality of battery modules 3 housed within the housing 2.

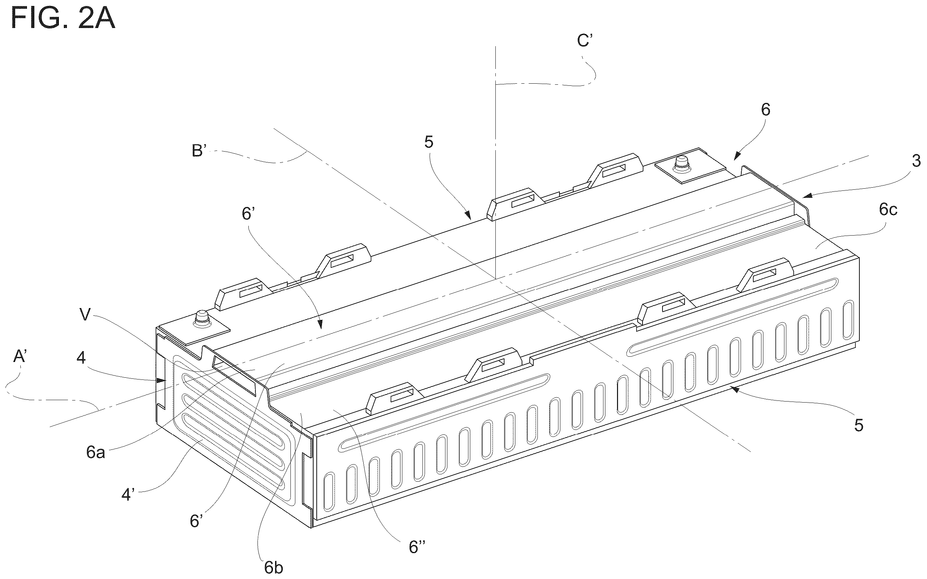

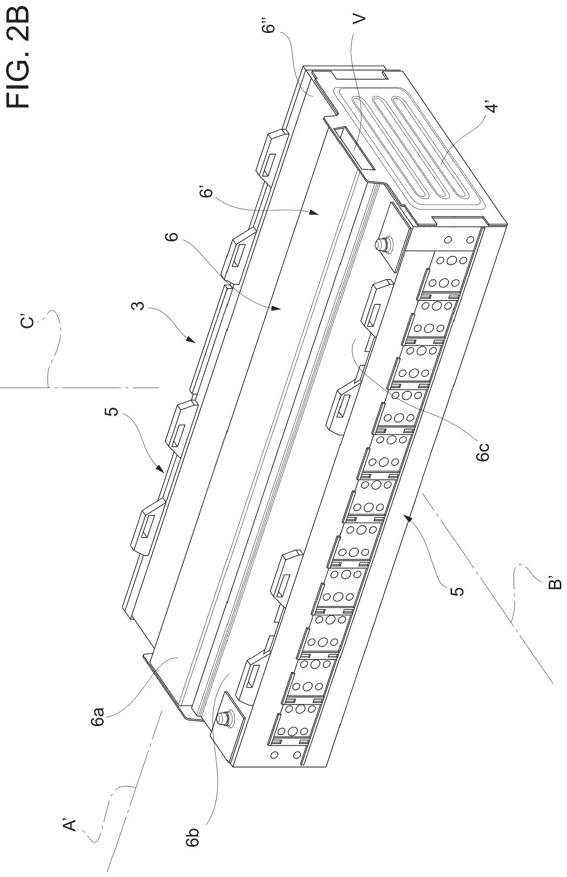

Each battery module 3 (see figures 2A, 2B) extends along a respective longitudinal axis A', transversal axis B' and vertical axis B'.

In the disclosed embodiment, the battery modules 3 face to another along the longitudinal axis A of the housing 2 and, in particular, they are adjacent along their transversal and axis B'. In other words, once packed, the longitudinal axis A' of the battery module 3 coincides with the transversal axis B of the housing 2.

In the disclosed embodiment, battery module 3 are not vertically superposed one with respect to the other within space S.

It is worth mentioning that housing 2 is realized in a plurality of elements that can be connected together and in the attached figures only the bottom portion is disclosed for sake of clarity.

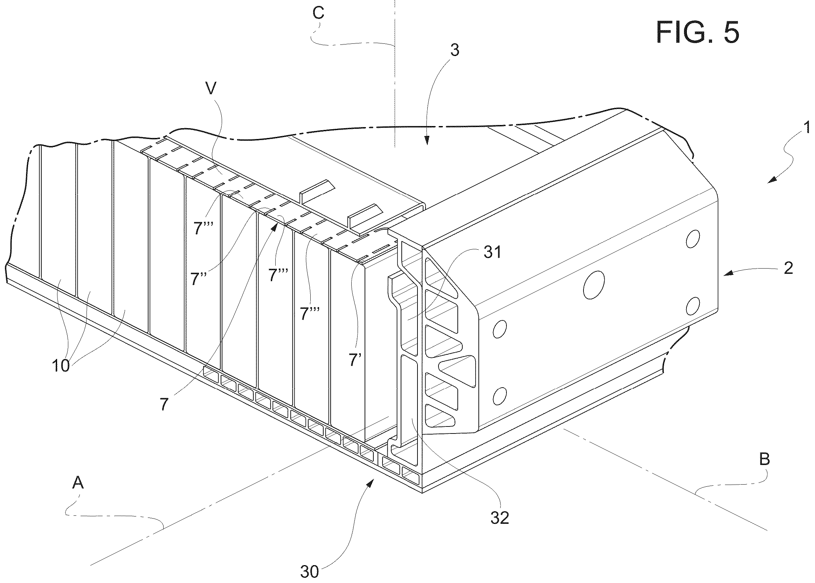

As shown in figures 2A, 2B and 5, each battery module 3 comprises a support system 4 and a venting system 6 connected together to define a space S' to house battery cells 10.

In detail, such space S' is defined laterally about vertical axis C by support system 4 and vertically delimited on one side by venting system 6 and by the opposite one by housing 2.

Support system 4 comprises a plurality of walls 4', 5 connected together to delimit the aforementioned space S'.

In detail, in the support system 4 comprise a front and a rear walls 4' extending along the transversal and vertical axis B', C' and spaced one with respect to the other along longitudinal axis A'.

The front and rear walls 4' have substantially a quadrangular, in detail rectangular, shape extending along transversal and vertical axis B', C' and provide longitudinal support to battery cells 10 in longitudinal row one to the other.

Preferably, battery cells 10 are glued one to another along their lateral sides, i.e. considering a longitudinal axis of each battery, they are adjacent transversally with respect to such axis.

The front and rear walls 4' are connected together by a lateral structures 5 that extends along longitudinal axis A'. In the disclosed embodiment, lateral structures 5 along vertical axis C' as the front and rear walls 4' thereby completely closing space S' from the space S of housing 2 from this side.

Preferably, the front and rear walls 4' and lateral structures 5 are each realized in metal.

Lateral structures 5 are connected to front and rear walls 4' in a fixed manner, e.g. by a mechanical releasable connection such as via threaded elements or by shape coupling or by a fixed connection such as by glue or by welding.

Venting system 6 comprises a venting portion 6' defining a venting channel V and a pair of fixing portions 6",

In detail, venting portion 6' comprises a central portion 6a extending along longitudinal axis A' and vertically faced above battery cells 10, i.e. central portion 6a is distanced with respect to battery cells 10 to define venting channel V.

Venting portion 6' further comprises vertical portions 6b extending from lateral edges of central portion 6a along vertical axis C. In particular, such vertical portions 6b extends vertically along the entire longitudinal extension of the central portion 6a.

The central portion 6a and the vertical portion 6b are substantially plate, in particular they can be realized by a metal bent plate.

According to the above, venting channel V is delimited transversally by vertical portions 6b and vertically by the central portion 6a and by battery cells 10 and configured to allow exit of gases in case of thermal runaway, as further disclosed in the following.

Fixing portions 6'' extends from vertical portions 6b along transversal axis B' along the entire extension of battery cells 10 and are configured to allow connection with front and rear walls 4' of the support system 4.

In particular, fixing portions 6'' each comprises a lateral wall 6c extending transversely along the entire longitudinal extension of the vertical portions 4b. Preferably lateral wall 6c extends substantially perpendicularly with respect to vertical portions 6b, i.e. is parallel to the central portion 6a of the venting portion 6' .

In detail the lateral wall 6c is shaped in order to be disposed at contact with the upper surface of the battery cells 10.

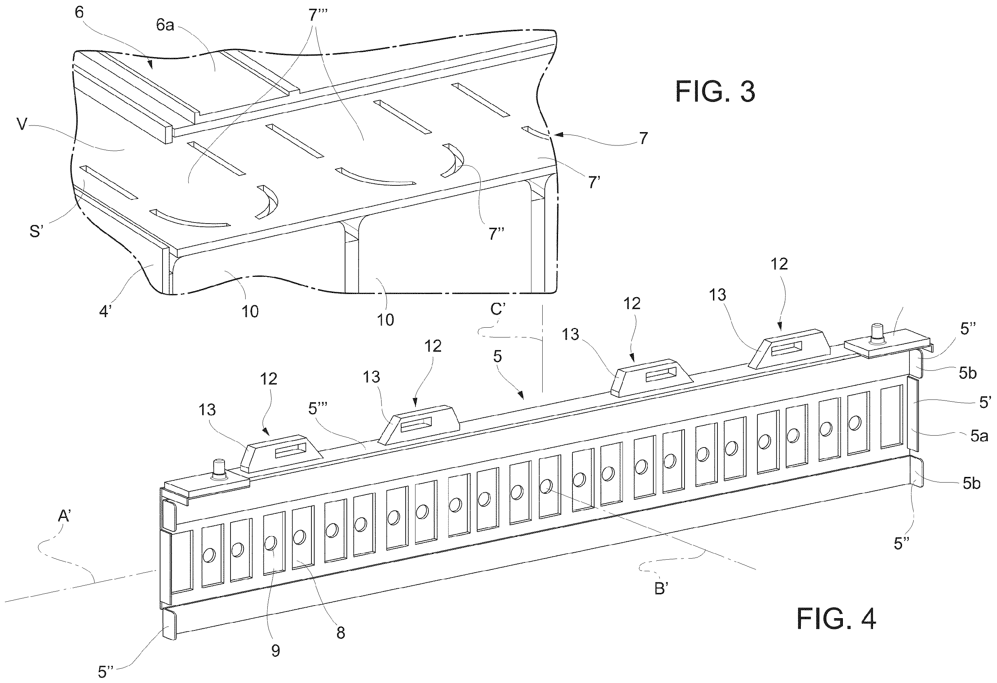

As shown in detail in figures 3 and 5, the battery module 1 comprises flame retardant means 7 housed within space S' and fluidly interposed between the battery cells 10 and venting channel V, the flame retardant means 7, as known, are configured to reduce flame propagation.

In detail, flame retardant means 7 comprise at least one plate 7' realized in fire resistant material that is placed vertically above the battery cells 10. Example of such fire/flame resistant material comprise mica.

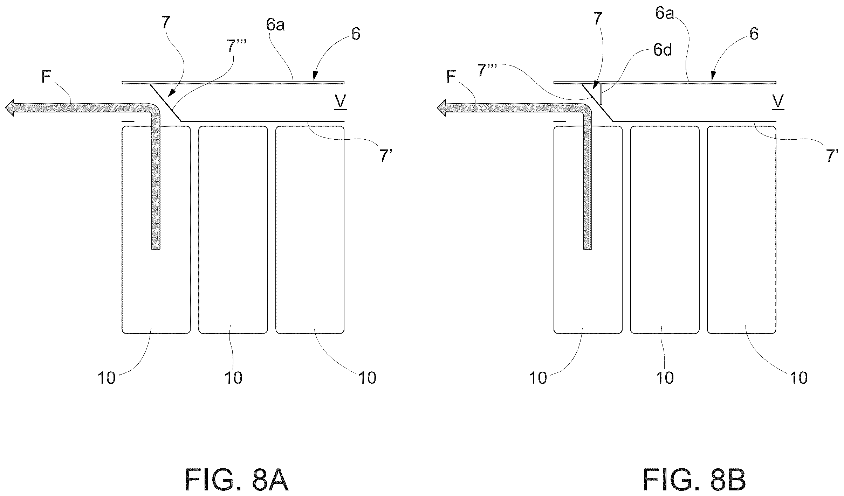

In detail, the plate 7' is placed vertically above in direct contact or distanced with respect battery cells 10, as better appreciated in figures 8A, 8B.

Plate 7' is provided with at least one opening 7" having passage cross-section along vertical axis C' configured to allow fluid communication between battery cells 10 and the venting channel V'.

In detail, the openings 7" are a plurality are provided for each battery cell 10. Accordingly, plate 7' is provided with a pattern of openings 7" realized in vertical correspondence of each battery cell 10.

Preferably, such openings 7" are realized along the entire extension of the battery, i.e. along its longitudinal and transversal axis, i.e. the transversal and longitudinal axis B', A' of the battery module 3.

In detail, openings 7'' are placed to define a specific pattern shape. In the disclosed embodiment, openings 7" are disposed to design a discontinued closed shape, that defines therefore a separated portion 7‴.

In the disclosed embodiment, the closed shape is a quadrangular beveled shape that defines a corresponding quadrangular beveled separated portion 7‴.

Making reference to figures 8A and 8B, the separated portion 7‴ can selectively move with respect to the remaining portion of plate 7' in order to selectively cooperate at contact with central plate 6a of venting system 6 thereby direction the flow F of combustion gases, in detail along transversal axis B'.

Indeed, the openings 7'' can be designed so that the discontinued connection portions between separated portion 7‴ and the remaining portion of plate 7' acts as movable connection, i.e. hinges, that allows movement of separated portion 7‴ about this latter till contacting the venting system 6 wall.

In particular, the separated portion 7‴ may rotate about an axis parallel to transversal axis B' thereby avoiding that adjacent battery cells 10 would have contact with the flow F of combustion gases.

In particular, the direction of rotation may depend on the relative position of each battery cells 10 along such transversal axis B in manner to minimize the number of battery cells 10 traversed by the flow F.

In the embodiment of figure 8A, the dimensions of the separated portion 7‴ is sufficient to contact by itself the central plate 6a of the venting system 6.

In the embodiment of figure 8A, the venting system 6 comprises a flange 6d extending from central plate 6a of venting system 6 and configured to allow contact cooperation with the separated portion 7‴. In such case, its dimensions can be independent with respect to the vertical distance between the central plate 6a and plate 7.

Making reference to figure 4, lateral structure 5 essentially comprises a main portion 5' configured to be connected to the front and rear walls 4' and to the venting system 6.

In detail, lateral structure 5 comprises first coupling portions 5" configured to be connected to front and rear walls 4' and second coupling portions 5''' configured to be connected to the venting system 6.

In particular, both coupling portions 5", 5‴ comprise cantilevered plate portions configured to allow connection to respectively front and rear walls 4' and to lateral walls 6c of the venting system 6.

Accordingly, first coupling portions 5'' extends from a front and rear edges of the main portion 5' parallel to the front and rear walls 4'; in the disclosed embodiment they are two cantilever plates extending on both the bottom and the top portion of the front and rear edges of the main portion 5'.

Analogously, second coupling portions 5‴ extends from a front and rear edges of the main portion 5' parallel to the lateral walls 6c ; in the disclosed embodiment they are two cantilever plates extending on the top portion of the front and rear edges of the main portion 5'.

Main portion 5' essentially comprises an intermediate portion 5a and a pair of vertical extremity portions 5b that extend vertically above and below the intermediate portion 5a. Both the intermediate portion 5a and the extremity portions 5b are parallel bands of the main portion 5', in particular the extremity portions 5b have the same vertical extension. Accordingly, main portion 5' cross-section is symmetric along longitudinal axis A.

The extremity portions 5b are preferably axially displaced along transversal axis B' with respect to the intermediate portion 5a.

Intermediate portion 5 is provided with a plurality of recesses 8 configured to be faced to a battery cell 10. Accordingly, recesses 8 are realized as extending along transversal axis B' opposite to space S' and each faced to a battery 1'. Therefore, they are equally spaced along longitudinal axis A'.

In particular, each recess 8 is provided with an opening 9 configured to allow passage of wires/cable/busbar to each battery cell.

Preferably, lateral structure 5 is provided by handling means 12 configured to allow the handle of the battery module 12. In particular such handling means 12 comprise a handle 13 that extends vertically from one of the extremity portions 5b of the main wall 5', in particular the upper one.

In the disclose embodiment, a plurality of handles 13 are provided on both lateral structures 5. In further detail, at least four handles 13 are provided, faces two by two. Each group of two handles 13 is shaped to allow left-hand or right-hand handling of the battery module 1.

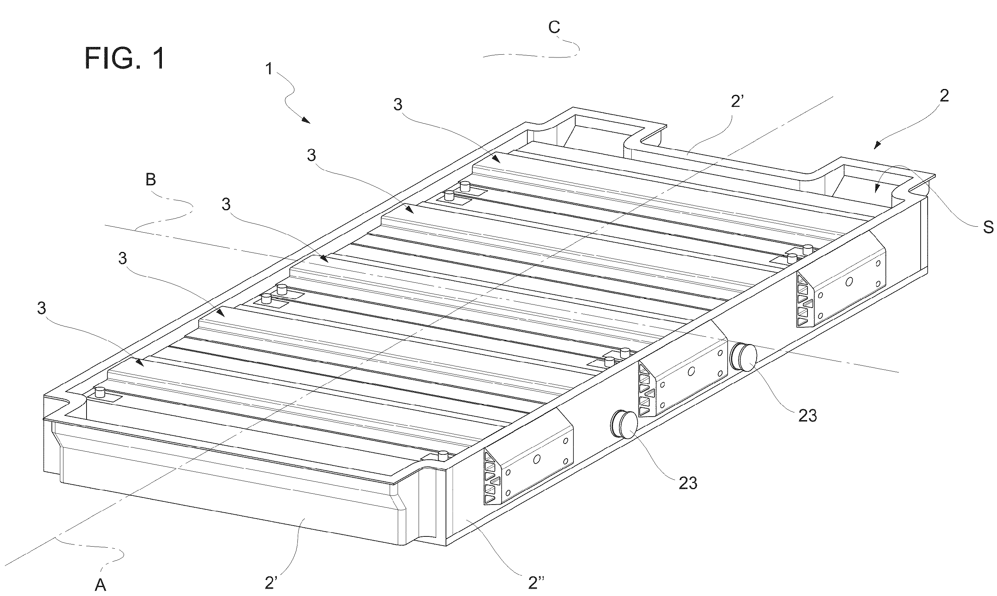

The housing 2, as better visible in figures 1, 5, 6 and 7 comprises a front and a rear walls 21 faced along longitudinal axis A and lateral walls 22 connecting together the front and rear walls 21.

The housing 2 further comprises a floor (not clearly visible in drawings) configured to define together with front and rear walls 21 and lateral walls 22 the space S that houses, as described above, the battery modules 3.

In particular, housing 2 is provided with venting means, such as at least one venting valve 23 configured to allow selectively fluid communication of space S with environment in particular when pressure therein reaches a predetermined level.

In detail, such venting valves 23 are realized in the lateral walls 22, in detail in an intermediate, substantially middle, position along longitudinal axis A.

Venting channel V is fluidly connected to venting valves 23 via a labyrinthic system 30 that is realized within housing 2. In detail, such labyrinthic system 30 is realized integrated the lateral walls 22.

Labyrinthic system 30 is configured to provide an obliged path to be followed by a flow of combusted gases and/or flames towards venting valves 23. Such obliges path has a predetermined length independently from the battery cell 10 starting ignition.

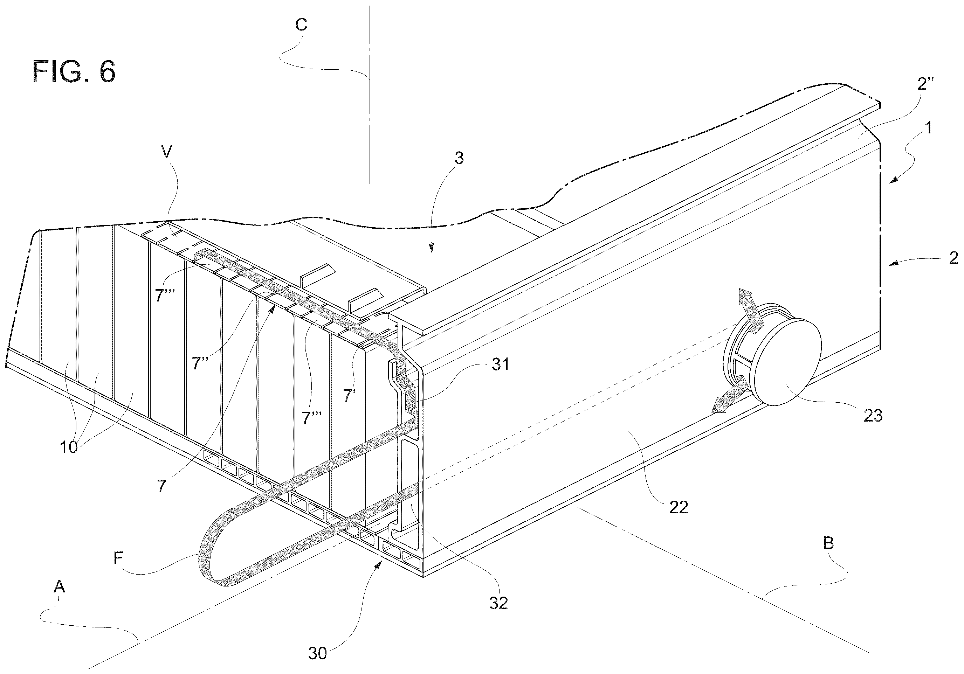

Making reference to figures 5 and 6 for increased clarity, labyrinthic system 30 may comprises first channel 31 and a second channel 32 that extends along longitudinal axis A of the housing 2.

First channel 31 is fluidly connected to the venting channel V while second channel 32 is fluidly connected to the venting valves 23. The first channel 31 and the second channel 32 are fluidly connected together by a joint portion 33.

Accordingly, second channel 32 is fluidly connected to the space S only via the first channel 31.

In detail, the first channel 31 and the second channel 32 are parallel and are vertically one above the other, in particular, the first channel 31 is vertically above the second channel 32. Both the first and second channels 31, 32 extends along the longitudinal axis A.

In detail, the first and second channels 31, 32 are integrated in lateral portion 2'' of the housing 2. In detail, the joint portion 33 is realized as a vertical fluid connection between first and second channels 31, 32 at their longitudinal extremities.

It is in particularly noticed that the first channel 31
is opened towards the venting channel V on a majority of the longitudinal extension of said first channel 31, in particular on the entire extension thereof along such direction.

The operation of the embodiment of the invention as described above is the following.

During manufacturing, battery modules 3 can be placed within housing 2 of battery pack 1 by handling via handles 13 realized in the lateral structures. Once all battery modules 3 are placed within the space S, the housing 2 is closed thereby isolating modules 3 from the environment.

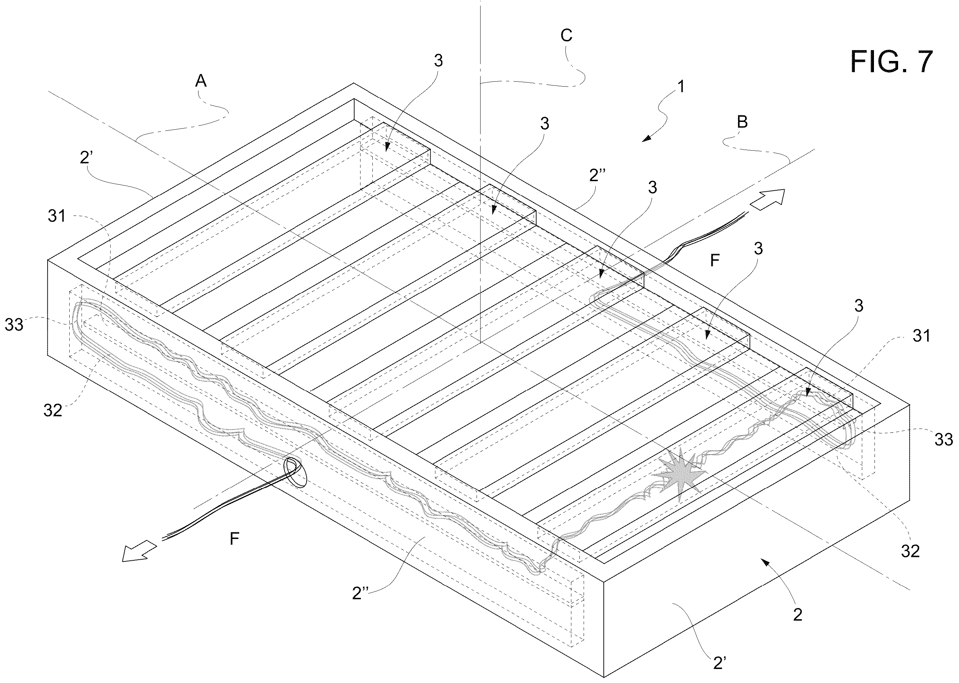

If a thermal runaway occurs (see figures 6 and 7) then a flow F of combustion gases and flames may generate from a battery cell 10within venting channel V. The flow F will then try to escape towards venting valves 23.

First, the flow F needs to pass through flame retardant means 7, i.e. through openings 7". In this way, the flames are retarded and the possibility of ignition of other nearing battery cells 10 is reduced.

If provided to move, separate portion 7‴ would further direction the flow F thereby reducing the number of batteries impacted by these latter along transversal direction.

Second, the flow F needs to move along the venting channel V towards labyrinthic system 30, i.e. the first channel 31, the joint portion 33 and the second channel 32. Accordingly, possible flames would not propagate for a long time since independently from the position of ignition of the battery cell, the disposition of labyrinthic system 30 requires to follow a path that has a predetermined length that is sufficient to provide enough time before flame exit from venting valves 23.

In view of the foregoing, the advantages of a battery module and a battery pack according to the invention are apparent.

Thanks to the proposed battery pack the fire escapes from venting valves after 5 minutes, thereby complying with R100.3 regulation requirements.

Indeed, the presence of the labyrinthic system obliges the flames igniting from a battery cell to pursue an obliged path that has a predetermined length independently from ignition point.

Moreover, the fact that such labyrinthic system is realized integrated within housing allows to provide such system in a very compact and cost-effective manner.

Furthermore, the presence of flame retardant means further reduce speed of flames and further reduces the possibility of ignition of adjacent batteries.

In addition, the lateral structure provides a compact, quick and effective way to manipulate cell modules while manufacturing the battery pack and facilitate their substitution.

Indeed, the lateral structure integrate a structural function, a handling function and allow passageways for wires/cables, thereby reducing the number of required components.

Moreover, the proposed structure of venting channel and support system provides a robust and compact packing structure for the battery pack thereby providing a stable way for housing battery cells.

It is clear that modifications can be made to the described battery module and a battery pack arrangement which do not extend beyond the scope of protection defined by the claims.

For example, the batteries can be stocked in different rows/disposition within battery module.

Battery modules can have a different shape and extension within longitudinal, transversal and vertical axis. Accordingly, shape of venting system and support system varies consequently.

Moreover, number and shape of the disclosed openings may vary, such as inclination and shapes of the disclosed walls.

## Claims

1. Battery pack (1) comprising a housing (2) defining a space (S) for housing at least a battery module (3), said
battery module (3) comprising a support system (4) defining a space (S') for housing a plurality of battery cells (10) and a venting system (4) defining a venting channel (V) fluidly connected to said space (S'), said housing (2) comprising venting means (23) configured to allow selectively communication between said space (S) and the environment, said battery pack (1) comprising a labyrinthic system (30) fluidly connecting said venting channel (V) to said venting means (23), said labyrinthic system (30) providing an obliged path for a flow (F) for gas/flames igniting from any among said battery cells (10) towards said venting means (23) of a predetermined length,
wherein said labyrinthic path (30) comprises a first channel (31) fluidly connected to said venting channel (V), a second channel (32) fluidly connected to said valve means (23) and a joint portion (33) fluidly connecting said first and second channel (31).
wherein said housing (2) extends along a longitudinal, transversal and vertical axes (A, B, C), said first and second channels (31, 32) being realized integrated in said housing (2) so that said first channel (31) is vertically above along said vertical axis (C) with respect to said second channel (32).

2. Battery pack according to claim 1, wherein said first and second channels (31, 32) extends along said longitudinal axis (A), said joint portion (33) connecting said first and second channels at their extremities along said longitudinal axis (A).

3. Battery pack according to claim 1 or 2, wherein said joint portion (33) extends along said vertical axis (C).

4. Battery pack according to any of the preceding claims, wherein said housing (2) comprises a front portion and a rear portion (2') faced along said longitudinal axis (A) and lateral portions (2") connected said front and rear portions (2') and extending along said longitudinal axis (A), said labyrinthic system (30) being carried by said lateral portions (2").

5. Battery pack according to claim 4, wherein said labyrinthic system is integrated into said lateral portions (2").

6. Battery pack according to any of preceding claims dependent on claim 3, wherein said first and second channels (31, 32) are fluidly connected only in correspondence of said joint portion (33).

7. Battery pack according to any of the preceding claims, wherein said venting means (23) are placed in an intermediate position on said second channel (32) along said longitudinal axis (A).

8. Battery pack according to any of the preceding claims, wherein said first channel (31) is opened towards said venting channel (V) on a majority of the longitudinal extension of said first channel (31).

9. Battery pack according to any of the preceding claims, wherein said first channel (31) is opened towards said venting channel (V) on the entire longitudinal extension of said first channel (31).
